(19) Europäisches Patentamt
European Patent Office
Office européen des brevets

(11) **EP 2 508 637 B1**

(12) **EUROPEAN PATENT SPECIFICATION**

(45) Date of publication and mention
of the grant of the patent:
**06.05.2015 Bulletin 2015/19**

(21) Application number: **10833433.5**

(22) Date of filing: **30.11.2010**

(51) Int Cl.:
*C22C 38/00* (2006.01)     *C22C 38/18* (2006.01)
*C22C 38/54* (2006.01)     *F16C 33/62* (2006.01)
*F16C 33/64* (2006.01)     *C21D 9/40* (2006.01)
*C22C 38/20* (2006.01)     *C22C 38/40* (2006.01)
*C22C 38/02* (2006.01)     *C22C 38/04* (2006.01)
*C22C 38/06* (2006.01)     *C22C 38/22* (2006.01)

(86) International application number:
**PCT/JP2010/071778**

(87) International publication number:
**WO 2011/065592 (03.06.2011 Gazette 2011/22)**

(54) **BEARING STEEL**

LAGERSTAHL

ACIER À ROULEMENTS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.11.2009  JP 2009272929
28.10.2010  JP 2010242668**

(43) Date of publication of application:
**10.10.2012  Bulletin 2012/41**

(73) Proprietors:
• **JFE Steel Corporation
Tokyo, 100-0011 (JP)**
• **NTN Corporation
Osaka-shi, Osaka 550-0003 (JP)**

(72) Inventors:
• **HONJO, Minoru
Tokyo 100-0011 (JP)**

• **HASE, Kazukuni
Tokyo 100-0011 (JP)**
• **KIMURA, Hideto
Tokyo 100-0011 (JP)**

(74) Representative: **Stebbing, Timothy Charles et al
Haseltine Lake LLP
Lincoln House, 5th Floor
300 High Holborn
London WC1V 7JH (GB)**

(56) References cited:
**EP-A1- 2 508 638     JP-A- 2 054 739
JP-A- 4 000 349     JP-A- 5 117 804
JP-A- H0 254 739     JP-A- H0 892 687
JP-A- 2009 242 937**

**Description**

[Technical Field]

The present invention relates to a bearing steel having excellent rolling contact fatigue life characteristics and suitable as a bearing material for use in automobiles, wind power, transport machines, electrical machines, precision machines, and other general industrial machinery.

[Background Art]

High-carbon chromium steel (JIS G4805 standard SUJ2) has been widely used as a bearing steel of this type. In general, one of the important properties of bearing steels is their excellent rolling contact fatigue life characteristics. It is generally believed that the rolling contact fatigue life of steel is shortened by the presence of a non-metallic inclusion or eutectic carbide in the steel.

It has been believed in recent studies that non-metallic inclusions in steel are mainly responsible for the decrease in rolling contact fatigue life. Thus, bearing life has been improved by reducing the oxygen content of steel to control the number and size of non-metallic inclusions in the steel.

For example, PTLs 1 and 2 propose techniques for controlling the composition, shape, or distribution of an oxide-based non-metallic inclusion in steel. However, the manufacture of a bearing steel containing a decreased number of non-metallic inclusions requires expensive converter steelmaking machines or extensive modifications of conventional facilities, which entails an immense economic burden.

PTL 3 discloses a technique for improving the rolling contact fatigue life characteristics by controlling the centerline segregation rate of carbon and the oxygen and sulfur contents of steel. However, as described above, a further reduction in oxygen content to manufacture a bearing steel containing a decreased number of non-metallic inclusions requires expensive converter steelmaking machines or extensive modifications of conventional facilities, which entails an immense economic burden.

Thus, not only the decrease in the number of non-metallic inclusions in steel but also the decrease in the eutectic carbide content of steel have received attention. For example, although a high-carbon chromium steel, which contains 0.95% by mass or more C, is very hard and has high wear resistance, the central portion of a casting steel has a high degree of segregation (hereinafter referred to as centerline segregation), and furthermore enormous eutectic carbide is formed in the casting steel, which shortens the rolling contact fatigue life. Thus, the central portion of the casting steel is removed as a waste or is subjected to diffusion treatment (hereinafter referred to as soaking) for a long period of time to sufficiently eliminate the centerline segregation and the eutectic carbide.

Regarding such a segregation problem, PTL 4 discloses a method in which steel is controlled to have specific composition such as C: 0.6% to 1.2% by mass, and the total cross-sectional area of carbide having a thickness of 2 $\mu$m or more and, with respect to the center line of a longitudinal cross-section through the shaft center of a wire or rod-shaped rolled steels, existing in a central region within 1/8 x D (D: the width of the longitudinal section) from the axis, including the axis of the longitudinal section, is 0.3% or less of the area of the longitudinal section. PTL 4 also quantitatively shows the influence of the amount of enormous carbide on the rolling contact fatigue life characteristics, indicating the presence of enormous eutectic carbide in steel that shortens the rolling contact fatigue life.

PTL 5 discloses a bearing steel that has a specific composition, such as C: 0.50% to 1.50% by mass and Sb: 0.0010% to 0.0150% by mass, a decreased amount of decarburized layer, and high thermal process productivity. It is an object of PTL 5 to improve thermal process productivity by the addition of Sb to decrease the formation of a decarburized layer in steel and thereby eliminate the cutting or grinding process after the thermal process. However, Sb may be highly toxic to human bodies and should therefore be treated carefully. Furthermore, the addition of Sb results in the condensation of Sb in the central segregation zone, worsening the centerline segregation. A portion containing condensed Sb can be locally hardened to have a different hardness from the base material. The different hardness may induce rolling contact fatigue fracture, shortening the rolling contact fatigue life.

In order to eliminate centerline segregation in the casting of a high-carbon chromium bearing steel and enormous eutectic carbide formed in the central segregation zone, for example, PTL 6 discloses a method for rolling a casting material into a billet and soaking the billet.

However, because of nonuniform steel temperature in soaking, a soaking temperature exceeding the solidus line in a portion could initiate melting in the portion again and induce a eutectic reaction, forming further enormous eutectic carbide.

Thus, in some applications of bearings, low-carbon alloy steel may be used in place of high-carbon chromium steel. For example, case-hardened steel is most commonly used after high-carbon chromium steel. However, case-hardened steel contains 0.23% by mass or less C and moderate amounts of Mn, Cr, Mo, and Ni or the like so as to achieve necessary quench hardenability and mechanical strength. In order to improve fatigue strength, the surface of case-hardened steel is hardened by carburization or carbonitriding.

For example, PTL 7 discloses a case-hardened steel that can be carburized in a short period of time, wherein the case-hardened steel has a specific chemical composition, such as C: 0.10% to 0.35%, and the activation energy of carbon diffusion in the steel defined by Q = 34140 - 605[%Si] + 183[%Mn] + 136[%Cr] + 122[%Mo] is 34000 kcal or less.

Likewise, PTL 8 discloses a technique regarding a carburized material that has excellent rolling contact fatigue characteristics, wherein the carburized material has a specific chemical composition, such as C: 0.1% to 0.45%, the austenite grain size number of a carburized layer is 7 or more, the carbon content of the surface ranges from 0.9% to 1.5%, and the retained austenite content of the surface ranges from 25% to 40%.

Although the carburization or carbonitriding can improve the rolling contact fatigue life characteristics, it may increase the manufacturing costs or decrease the yield because of a large strain or dimension change, thus increasing the product cost.

Some applications of bearing steels require a large section. This requires extensive modifications of carburization or carbonitriding facilities, which entail an immense economic burden.

[Citation List]

[Patent Literature]

PTL 1: Japanese Unexamined Patent Application Publication No. 1-306542
PTL 2: Japanese Unexamined Patent Application Publication No. 3-126839
PTL 3: Japanese Unexamined Patent Application Publication No. 7-127643
PTL 4: Japanese Patent No. 3007834
PTL 5: Japanese Unexamined Patent Application Publication No. 5-271866
PTL 6: Japanese Unexamined Patent Application Publication No. 3-75312
PTL 7: Japanese Patent No. 4066903
PTL 8: Japanese Patent No. 4050829

[Summary of Invention]

[Technical Problem]

With a year-by-year increase in the scale of wind power, transport machines, and general industrial machinery, there has been an urgent need to further increase the section of bearing steels. Methods for manufacturing steel ingots are broadly divided into ingot casting and continuous casting. Bearing steels having a small section to a large section, which are hitherto manufactured by continuous casting steel, can be provided by manufacturing ingot casting steel in order to answer the upsizing tendency. However, steels manufactured by the ingot casting (hereinafter referred to as ingot steels) have a particular problem that enormous eutectic carbide is formed in a segregation zone, such as a V-segregation zone or an inverse V-segregation zone. This is because ingot steels have a higher degree of segregation and consequently a higher frequency of enormous eutectic carbide than continuously casting steels. Thus, it is important to decrease the formation of eutectic carbide.

Accordingly, it is an object of the present invention to provide a method for decreasing the formation of eutectic carbide in the segregation zone in bearing steels particularly made of ingot steels, as well as continuously casting steels.

[Solution to Problem]

As a result of extensive studies to solve the problems described above, the present inventors have found that the amounts of C, Si, Mn, Cr, and Al added to a conventional bearing steel are limited to a specific range and that a eutectic carbide formation index is newly introduced and is limited to a specific range. Thus, the present inventors found that these limitations can avoid the formation of enormous eutectic carbide in the V-segregation zone or the inverse V-segregation zone, which are particularly problematic in ingot steels, and a bearing steel having excellent rolling contact life characteristics can be provided.

More specifically, the present inventors manufactured a bearing steel made of an ingot steel in which the amounts of C, Si, Mn, Cr, and Al are altered and the eutectic carbide formation index Ec having the formula (1) described below is altered. As a result of extensive studies on the structure and the rolling contact fatigue life characteristics of the bearing steel, the present inventors arrived at the present invention by finding that a steel, even made of an ingot steel, having a composition and Ec in specific ranges can be free of eutectic carbide in the steel and have improved rolling contact fatigue life characteristics.

The aspects of the present invention are as follows:

1. A bearing steel having a composition containing

C: 0.56% by mass or more and 0.70% by mass or less,
Si: 0.15% by mass or more and less than 0.50% by mass,
Mn: 0.60% by mass or more and 1.50% by mass or less,
Cr: 0.50% by mass or more and 1.10% by mass or less,
P: 0.025% by mass or less,
S: 0.025% by mass or less,
Al: 0.005% by mass or more and 0.500% by mass or less,
O: 0.0015% by mass or less,
N: 0.0030% by mass or more and 0.015% by mass or less,

and optionally further contains one or more selected from

Cu: 0.005% by mass or more and 0.5% by mass or less,
Ni: 0.005% by mass or more and 1.00% by mass or less, and
Mo: 0.01% by mass or more and 0.5% by mass or less.

and optionally further contains one or more selected from

W: 0.001% by mass or more and 0.5% by mass or less,
Nb: 0.001% by mass or more and 0.1% by mass or less,
Ti: 0.001% by mass or more and 0.1% by mass or less,
Zr: 0.001% by mass or more and 0.1% by mass or less, and
V: 0.002% by mass or more and 0.5% by mass or less.

and optionally further contains

B: 0.0002% by mass or more and 0.005% by mass or less..

a remainder of Fe and incidental impurities,
wherein eutectic carbide formation index Ec defined by the formula (1) satisfies
$0 < Ec \leq 0.25$,
wherein

$$Ec = (-0.07 \times [\%Si] - 0.03 \times [\%Mn] + 0.04 \times [\%Cr] - 0.36 \times [\%Al] + 0.79) - [\%C] \quad \cdots (1)$$

wherein [ ] indicates the amount of component described in parentheses (% by mass).

Summarizing, a bearing steel according to the present invention has a composition containing
C: 0.56% by mass or more and 0.70% by mass or less, Si: 0.15% by mass or more and less than 0.50% by mass, Mn: 0.60% by mass or more and 1.50% by mass or less, Cr: 0.50% by mass or more and 1.10% by mass or less, P: 0.025% by mass or less, S: 0.025% by mass or less, Al: 0.005% by mass or more and 0.500% by mass or less, O: 0.0015% by mass or less, and N: 0.0030% by mass or more and 0.015% by mass or less,
and optionally at least one of (A) to (C):

(A) one or more selected from Cu: 0.005% by mass or more and 0.5% by mass or less, Ni: 0.005% by mass or more and 1.00% by mass or less, and Mo: 0.01% by mass or more and 0.5% by mass or less,
(B) one or more selected from W: 0.001% by mass or more and 0.5% by mass or less, Nb: 0.001% by mass or more and 0.1% by mass or less, Ti: 0.001% by mass or more and 0.1% by mass or less, Zr: 0.001% by mass or more and 0.1% by mass or less, and V: 0.002% by mass or more and 0.5% by mass or less, and
(C) B: 0.0002% by mass or more and 0.005% by mass or

less,
and a remainder of Fe and incidental impurities,
wherein eutectic carbide formation index Ec defined by the formula (1) satisfies $0 < Ec \leq 0.25$.

[Advantageous Effects of Invention]

In accordance with the present invention, a bearing steel having much better rolling contact fatigue life characteristics than conventional bearing steels can be stably manufactured. In particular, ingot steels can be used to manufacture bearing steels having a small section to those having a large section. The present invention also contributes to the upsizing of wind power generators, transport machines, and general industrial machinery, providing industrially advantageous effects.

[Brief Description of Drawings]

[Fig. 1] Fig. 1 is a graph showing the evaluation result of the rolling contact fatigue life (vertical axis: $B_{10}$ life ratio) as a function of Ec (horizontal axis: % by mass).
[Fig. 2] Fig. 2 is a view illustrating the sampling position and the test surface size in sampling for microstructure observation from a steel billet after square forging.
[Fig. 3] Fig. 3 is a view illustrating the sampling position and the test specimen size in sampling for the evaluation of rolling contact life from a steel billet after square forging.
[Fig. 4] Fig. 4 is a view illustrating the sampling position and the test surface size in sampling for microstructure observation from a steel billet after circular forging.
[Fig. 5] Fig. 5 is a view illustrating the sampling position and the test surface size in sampling for the evaluation of rolling contact life from a steel billet after circular forging.
[Fig. 6] Fig. 6 is a view illustrating the sampling position and the test specimen size in sampling for the evaluation of machinability from a steel billet after square forging.
[Fig. 7] Fig. 7 is a view illustrating the sampling position and the test specimen size in sampling for the evaluation of machinability from a steel billet after circular forging.

[Description of Embodiments]

A bearing steel according to the present invention will be described in detail below.
First, reasons for limiting the percentage of each component of the composition of a bearing steel according to the present invention will be described below.

C: 0.56% by mass or more and 0.70% by mass or less

C can increase the strength of steel and effectively improve the rolling contact fatigue life characteristics of steel. The C content in the present invention is 0.56% by mass or more. On the other hand, the C content of more than 0.70% by mass results in the formation of enormous eutectic carbide during the casting of the material, shortening the rolling contact fatigue life. Thus, the C content is 0.56% by mass or more and 0.70% by mass or less.

Si: 0.15% by mass or more and less than 0.50% by mass

Si can act as a deoxidizing agent, increase the strength of steel owing to solid-solution hardening, and improve the rolling contact fatigue life characteristics of steel. Si is added to produce these effects. In order to produce these effects, 0.15% by mass or more Si is added in the present invention. However, the addition of 0.50% by mass or more Si results in deterioration in the machinability and the forgeability of steel. Si can be bound to oxygen in steel and remain as an oxide in the steel, causing deterioration in the rolling contact fatigue life characteristics. Furthermore, Si condensed in a segregation zone facilitates the formation of eutectic carbide. Thus, the upper limit of Si is less than 0.50% by mass.
Mn: 0.60% by mass or more and 1.50% by mass or less Mn can be added to improve quench hardenability, increase the toughness of steel, and improve the rolling contact fatigue life characteristics of steel. 0.60% by mass or more Mn is added in the present invention. However, the addition of more than 1.50% by mass Mn results in deterioration in machinability. Furthermore, Mn condensed in a segregation zone facilitates the formation of eutectic carbide. Thus, the upper limit of Mn is 1.50% by mass.

Cr: 0.50% by mass or more and 1.10% by mass or less

In the same manner as in Mn, Cr can be added to increase the toughness of steel and improve the rolling contact fatigue life characteristics of steel. 0.50% by mass or more Cr is added in the present invention. However, the addition of more than 1.10% by mass Cr results in deterioration in machinability. Thus, the upper limit of Cr is 1.10% by mass.

P: 0.025% by mass or less

P is a detrimental element that can decrease the base material toughness or the rolling contact fatigue life of steel and is preferably decreased as much as possible. In particular, the P content of more than 0.025% by mass results in a significant decrease in base material toughness and rolling contact fatigue life. Thus, the P content is 0.025% by mass or less, preferably 0.020% by mass or less. It is industrially difficult to achieve the P content of 0%. Thus, the P content is often 0.003% by mass or more.

S: 0.025% by mass or less

S is contained in steel as a non-metallic inclusion MnS. Since bearing steels contain a decreased amount of oxide, which can often induce rolling contact fatigue, a large amount of MnS in steel can shorten the rolling contact fatigue life. Thus, S is preferably decreased as much as possible. The S content in the present invention is 0.025% by mass or less, preferably 0.020% by mass or less. It is industrially difficult to achieve the S content of 0%. Thus, the S content is often 0.0001% by mass or more.

Al: 0.005% by mass or more and 0.500% by mass or less

Al can act as a deoxidizing agent, form a nitride and decrease the size of austenite grains, and improve the toughness and the rolling contact fatigue life characteristics. Al is added to produce these effects. In order to produce these effects, 0.005% by mass or more Al is added in the present invention. However, the addition of more than 0.500% by mass Al results in the formation of a coarse oxide type inclusion in steel, causing deterioration in the rolling contact fatigue life characteristics of steel. Furthermore, Al condensed in a segregation zone facilitates the formation of eutectic carbide. Thus, the upper limit of the Al content is 0.500% by mass, preferably 0.450% by mass or less.

O: 0.0015% by mass or less

O can be bound to Si or Al to form a hard oxide-based non-metallic inclusion, shortening the rolling contact fatigue life. Thus, O is preferably decreased as much as possible and is 0.0015% by mass or less. It is industrially difficult to achieve the O content of 0%. Thus, the O content is often 0.0003% by mass or more.

N: 0.0030% by mass or more and 0.015% by mass or less

N can be bound to Al to form a nitride-based non-metallic inclusion, decrease the size of austenite grains, and improve the toughness and the rolling contact fatigue life characteristics. Thus, 0.003% by mass or more N is added. However, the addition of more than 0.015% by mass N results in the formation of a large number of nitride-based inclusions in steel, causing deterioration in the rolling contact fatigue life characteristics. This also results in the presence of a large amount of N that does not form a nitride in steel (free N), thus decreasing the toughness of steel. Thus, the upper limit of the N content is 0.015% by mass, preferably 0.010% by mass or less.

Eutectic carbide formation index Ec: $0 < Ec \leq 0.25$

The present inventors smelted steels having various compositions in a vacuum melting furnace. The resulting steel ingot was examined for the presence of eutectic carbide. Regression calculation on the result was performed with various selected sets of parameters (main influential elements). As a result, it was found that the eutectic carbide index Ec defined by the formula (1) must satisfy $0 < Ec \leq 0.25$ as a steel composition with which the formation of eutectic carbide can be decreased.

$$Ec = (-0.07 \times [\%Si] - 0.03 \times [\%Mn] + 0.04 \times [\%Cr] -$$

$$0.36 \times [\%Al] + 0.79) - [\%C] \quad \cdots (1)$$

wherein [ ] indicates the amount of component described in parentheses (% by mass).

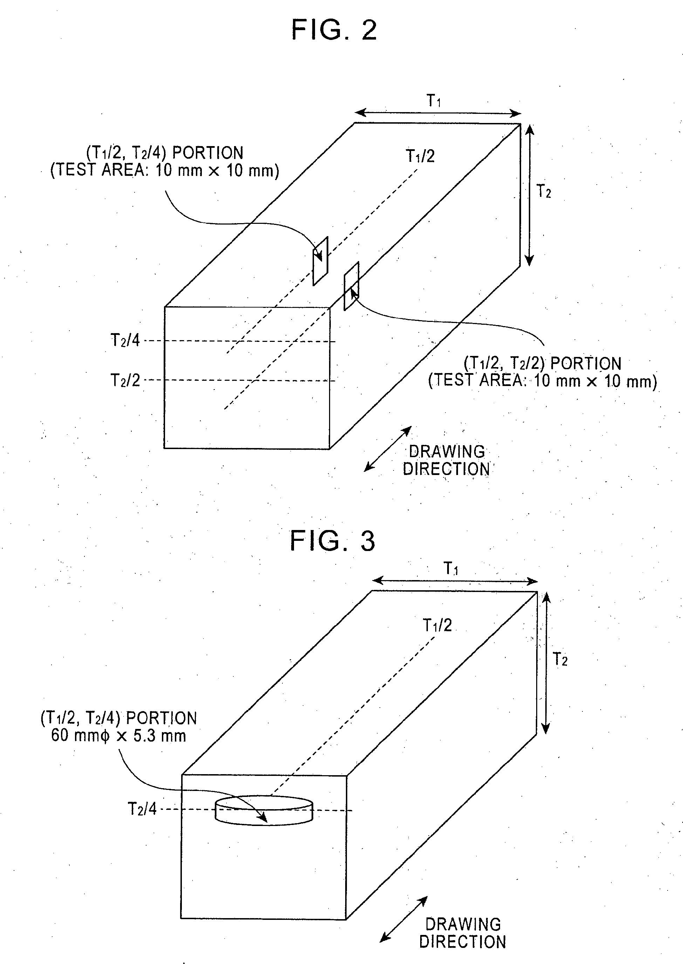

The present inventors manufactured bearing steels having the compositions and Ec's listed in Table 1 and examined their rolling contact fatigue life characteristics. The rolling contact fatigue life characteristics were performed by the test method described below in the examples. In order to examine the presence of eutectic carbide and the influence of the composition and Ec on the rolling contact fatigue life characteristics, bearing steels were manufactured under fixed conditions. More specifically, after smelting in a converter, an ingot steel (ingot) having a 1350 mm x 1250 mm section (top side) and a 1280 x 830 mm section (bottom side) was formed by ingot casting. The ingot steel was forged to have a 550 mm square section. Test specimens for observing formed eutectic carbide illustrated in Fig. 2 and rolling contact fatigue test specimens illustrated in Fig. 3 were sampled from the forged steel billet. The presence of eutectic carbide, the rolling contact fatigue life characteristics, and the machinability (determined from the tool life ratio) were examine by the test method described below.

Each of the test specimens was sampled from a portion of the forged steel billet corresponding to the bottom of the ingot steel.

[Table 1]

Table 1 (% by mass)

| Steel No. | C | Si | Mn | P | S | Cr | Al | O | N | Ec | Note |
|---|---|---|---|---|---|---|---|---|---|---|---|
| A-1 | 1.05 | 0.25 | 0.45 | 0.016 | 0.008 | 1,45 | 0.025 | 0.0010 | 0.0031 | -0.24 | Reference steel |
| A-2 | 0.70 | 0.46 | 1.23 | 0.018 | 0.005 | 0.51 | 0.021 | 0.0011 | 0.0030 | 0.03 | Inventive |
| A-3 | 0.70 | 0.49 | 1.50 | 0.011 | 0.005 | 0.51 | 0.121 | 0.0010 | 0.0038 | -0.01 | Comparative steel |
| A-4 | 0.62 | 0.32 | 0.97 | 0.010 | 0.006 | 0.88 | 0.024 | 0.0008 | 0.0052 | 0.15 | Inventive |
| A-5 | 0.57 | 0.16 | 0.74 | 0.015 | 0.003 | 0.71 | 0.021 | 0.0009 | 0.0049 | 0.21 | Inventive |
| A-6 | 0.48 | 0.19 | 0.58 | 0.011 | 0.005 | 1.09 | 0.033 | 0.0009 | 0.0045 | 0.31 | Comparative steel |
| A-7 | 0.56 | 0.22 | 0.62 | 0.008 | 0.002 | 1.00 | 0.028 | 0.0008 | 0.0036 | 0.23 | Inventive |
| A-8 | 0.55 | 0.23 | 0.63 | 0.007 | 0.003 | 0.95 | 0.021 | 0.0009 | 0.0042 | 0.24 | Comparative steel |
| A-9 | 0.56 | 0.16 | 0.60 | 0.007 | 0.003 | 1.00 | 0.037 | 0.0007 | 0.0035 | 0.23 | Inventive |
| A-10 | 0.56 | 0.16 | 0.58 | 0.009 | 0.003 | 1.05 | 0.036 | 0.0008 | 0.0031 | 0.23 | Comparative steel |
| A-11 | 0.70 | 0.50 | 1.50 | 0.012 | 0.003 | 0.51 | 0.340 | 0.0011 | 0.0042 | -0.09 | Comparative steel |
| A-12 | 0.67 | 0.39 | 0.95 | 0.008 | 0.002 | 0.56 | 0.035 | 0.0010 | 0.0035 | 0.07 | Inventive |

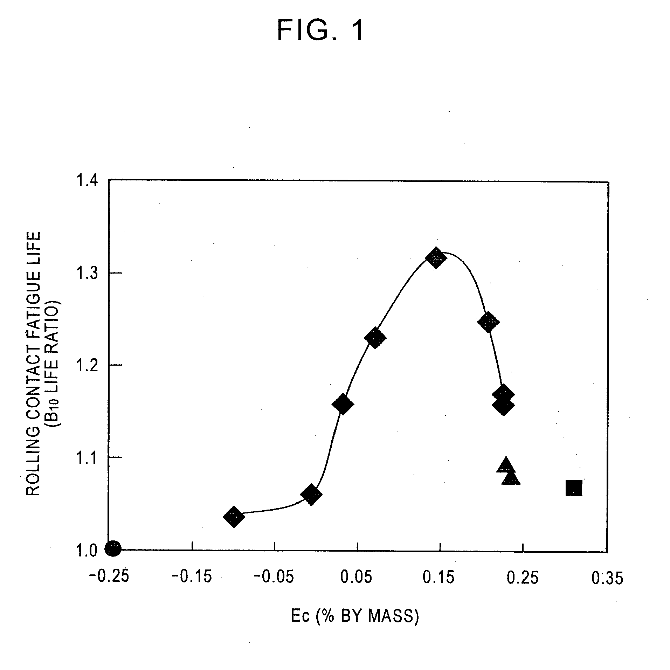

Table 2 shows the evaluation results of rolling contact fatigue life and machinability (determined from the tool life ratio). Fig. 1 shows the relationship between the evaluation results of rolling contact fatigue life (vertical axis: $B_{10}$ life ratio) and Ec (horizontal axis: % by mass). As shown in the figure, enormous eutectic carbide is formed in steel when Ec is 0 or less. Even an increase in Ec in this range cannot significantly improve the rolling contact fatigue life relative to the level of a reference material. When Ec is more than 0, eutectic carbide is not formed, and the rolling contact fatigue life is markedly improved. However, Ec of more than 0.25 resulted in a decrease in the amount of C added and consequently a decrease in the strength and the rolling contact fatigue life of steel after quenching. Thus, when Ec is in the range of $0 < Ec \leq 0.25$, eutectic carbide is not formed in steel, and therefore the rolling contact fatigue life characteristics are improved. Even when Ec is within the scope of the present invention, A-8 having a C content outside the scope of the present invention and A-10 having a Mn content outside the scope of the present invention had a decreased strength and consequently a shortened rolling contact fatigue life.

[Table 2]

Table 2 Test results

| Steel No. | Presence of eutectic carbide | Ec | Rolling contact fatigue life (B10 life ratio) | Tool life ratio | Note | Symbol in Fig. 1 |
|---|---|---|---|---|---|---|
| A-1 | Yes | -0.24 | 1.00 | 1.00 | Reference steel | ● |
| A-2 | No | 0.03 | 1.16 | 1.21 | Inventive steel | ♦ |
| A-3 | Yes | -0.01 | 1.06 | 1.20 | Comparative steel | ♦ |
| A-4 | No | 0.15 | 1.32 | 1.22 | Inventive steel | ♦ |
| A-5 | No | 0.21 | 1.25 | 1.24 | Inventive steel | ♦ |
| A-6 | No | 0.31 | 1.07 | 1.24 | Comparative steel | ▪ |
| A-7 | No | 0.23 | 1.17 | 1.20 | Inventive steel | ♦ |
| A-8 | No | 0.24 | 1.08 | 1.20 | Comparative steel | ▲ |
| A-9 | No | 0.23 | 1.16 | 1.21 | Inventive steel | ♦ |
| A-10 | No | 0.23 | 1.09 | 1.20 | Comparative steel | ▲ |
| A-11 | Yes | -0.09 | 1.03 | 1.18 | Comparative steel | ♦ |
| A-12 | No | 0.07 | 1.23 | 1.22 | Inventive steel | ♦ |

The reason for limiting Ec to produce a steel free of eutectic carbide is that, as described above, the formation of eutectic carbide in steel can cause rolling contact fatigue originating from the eutectic carbide, which causes deterioration in the rolling contact fatigue life characteristics.

In accordance with the present invention, the formation of eutectic carbide can be decreased even with an ingot steel manufactured by ingot casting. Thus, the present invention is particularly effective when applied to ingot steels manufactured by ingot casting. It is also effective to use ingot steels to manufacture bearing products having a small section to those having a large section.

In addition to these base components, the following components can appropriately be added.

(A) One or more selected from Cu: 0.005% to 0.5% by mass, Ni: 0.005% to 1.00% by mass, and Mo: 0.01% to 0.5% by mass

Cu, Ni, and Mo can improve the quench hardenability, the strength after tempering, and the rolling contact fatigue life characteristics of steel and can be selectively added in accordance with the strength required (more specifically, any one of Cu, Ni, Mo, Cu + Ni, Cu + Mo, Ni + Mo, and Cu + Ni + Mo can be selectively added). In order to produce such effects, the amounts to be added are preferably 0.005% by mass or more for Cu and Ni and 0.01% by mass or more for Mo. However, the addition of more than 0.5% by mass Cu or Mo or more than 1.00% by mass Ni results in deterioration in the machinability of steel. Thus, Cu, Ni, and Mo are preferably added in amounts equal to or below these upper limits.

Likewise, in order to increase the strength or improve the rolling contact fatigue life characteristics of steel, in addition to the components described above, the following components may be added to a bearing steel according to the present invention.

(B) One or more of W: 0.001% to 0.5% by mass, Nb: 0.001% to 0.1% by mass, Ti: 0.001% to 0.1% by mass, Zr: 0.001% to 0.1% by mass, and V: 0.002% to 0.5% by mass

W, Nb, Ti, Zr, and V can improve the quench hardenability, the strength after tempering, and the rolling contact fatigue life characteristics of steel and can be selectively added in accordance with the strength required (more specifically, any one of W, Nb, Ti, Zr, V, W + Nb, W + Ti, W + Zr, W + V, Nb + Ti, Nb + Zr, Nb + V, Ti + Zr, Ti + V, Zr + V, W + Nb + Ti, W + Nb + Zr, W + Nb + V, W + Ti + Zr, W + Ti + V, W + Zr + V, Nb + Ti + Zr, Nb + Ti + V, Nb + Zr + V, Ti + Zr + V, W + Nb + Ti + Zr, W + Nb + Ti + V, W + Nb + Zr + V, W + Ti + Zr + V, Nb + Ti + Zr + V, and W + Nb + Ti + Zr + V can be selectively added). In order to produce such effects, the amounts to be added are preferably 0.001% by mass or more for W, Nb, Ti, and Zr and 0.002% by mass or more for V. However, the addition of more than 0.5% by mass W or V or more than 0.1% by mass of Nb, Ti, or Zr results in deterioration in the machinability of steel. Thus, these elements are preferably added in amounts equal to or below these upper limits.

(C) B: 0.0002% to 0.005% by mass

B can improve quench hardenability and thereby increase the strength of steel after tempering and improve the rolling contact fatigue life characteristics of steel. B can be added to steel on an as-needed basis. In order to produce these effects, 0.0002% by mass or more of B is preferably added. However, the addition of more than 0.005% by mass B results in deterioration in workability. Thus, 0.0002% to 0.005% by mass B is preferably added.

When an element other than the base components is added, any combination of elements of (A), (B), and (C) groups is available. More specifically, an element selected from any one element group may be added, elements selected from each of two element groups may be added, or elements selected from each of all the element groups may be added.

In a bearing steel according to the present invention, the components other than the components described above are Fe and incidental impurities. Examples of the incidental impurities include, but are not limited to, Sn, Sb, As, and Ca.

A bearing steel having the composition described above is smelted in a vacuum melting furnace or a converter and further by a known refining method, such as a degassing process, and is then formed into a cast billet by ingot casting or continuous casting. In accordance with the present invention, even when a cast billet is formed by ingot casting by which eutectic carbide is particularly easily precipitated, the formation of eutectic carbide can be prevented. Thus, the present invention can be applied to ingot steels (with which large cast billets can be manufactured). Cast billets are subsequently subjected to a forming process, such as rolling or forging, to produce bearing components.

[EXAMPLES]

[EXAMPLE 1]

A steel having a composition listed in Table 3 was smelted by converter refining and a degassing process and was then formed into a cast billet having a size listed in Table 4 by ingot casting or continuous casting. The cast billet was heated to a temperature in the range of 1000°C to 1350°C in a furnace and was then forged to have a section size listed in Table 4. The presence of eutectic carbide and the rolling contact fatigue life characteristics of the forged product were examined as described below.

[Presence of Eutectic Carbide]

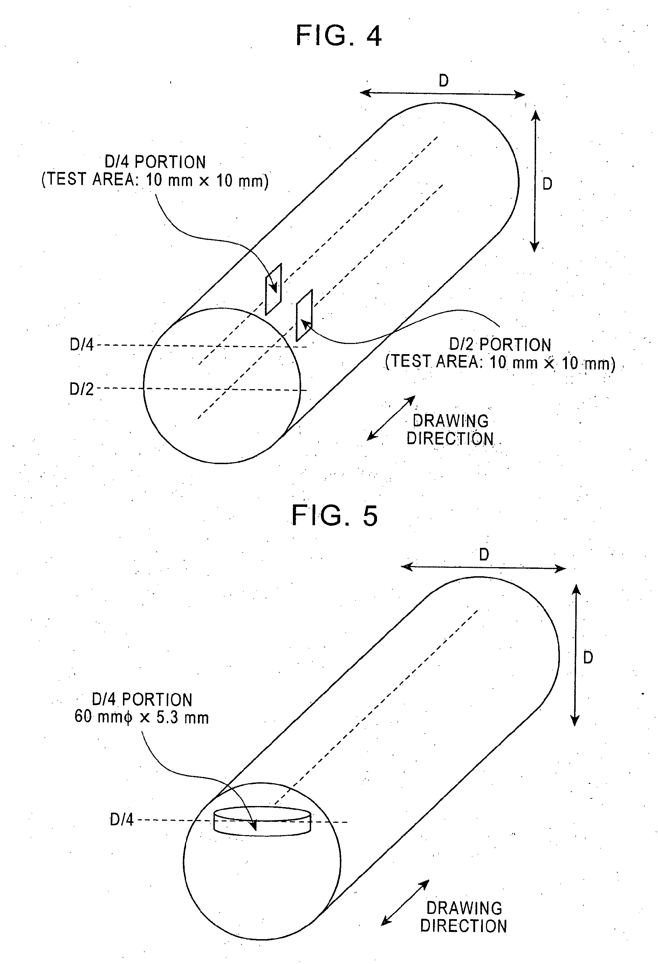

The presence of eutectic carbide was examined by taking a sample for microstructure observation from a ($T_1$/2, $T_2$/2) portion (central portion) and a ($T_1$/2, $T_2$/4) portion ($T_1 = T_2$ denote a side length of a square-forged steel billet: Fig. 2) or a D/4 portion and a D/2 portion (D denotes the diameter of a circular-forged steel billet: Fig. 4) of a forged steel billet such that the section in the drawing direction became a surface to be observed, etching the sample with 3% nital, and observing the sample with a scanning electron microscope (SEM) at a magnification ratio of 500. The test area was 10 mm x 10 mm. Each test specimen was sampled from a portion of the forged steel billet corresponding to the bottom of an ingot steel.

[Rolling Contact Fatigue Life Characteristics]

The rolling contact fatigue life characteristics are preferably determined in actual use after forging, cutting, quenching, and tempering. However, this requires long term. Thus, the rolling contact fatigue life characteristics were determined with a thrust type rolling contact fatigue machine as described below. A 60 mm$\phi$ x 5.3 mm disk was cut from a ($T_1$/2, $T_2$/4) portion ($T_1 = T_2$ denote a side length of a square-forged steel billet: Fig. 3) or a D/4 portion (D denotes the diameter of a circular-forged steel billet: Fig. 5) of a forged steel billet, was heated at 950°C for 20 minutes, and was quenched with an oil at 25°C. The disk was then tempered at 170°C for 1.5 hours and was flat-polished to 60 mm$\phi$ x 5 mm. The test surface was mirror-finished. The test specimen thus prepared was subjected to a rolling contact fatigue test under a maximum Hertzian contact stress of 5.8 GPa with a thrust rolling contact fatigue machine in which a steel ball rolled on the circumference of a circle having a diameter of approximately 38 mm. Each of the test specimens was sampled from a portion of the forged steel billet corresponding to the bottom of an ingot steel or a continuously casting steel.

The rolling contact fatigue life characteristics were determined as described below. The stress loading frequency when the test specimen underwent detachment was measured for 10 to 15 test specimens. The relationship between the cumulative probability and the stress loading frequency was organized using Weibull probability paper. After that, the cumulative probability 10% (hereinafter referred to as $B_{10}$ life) was determined. The rolling contact fatigue life characteristics were judged to be improved when the $B_{10}$ life was improved by 10% or more with respect to a reference steel (A-1: SUJ2 equivalent steel).

[Machinability]

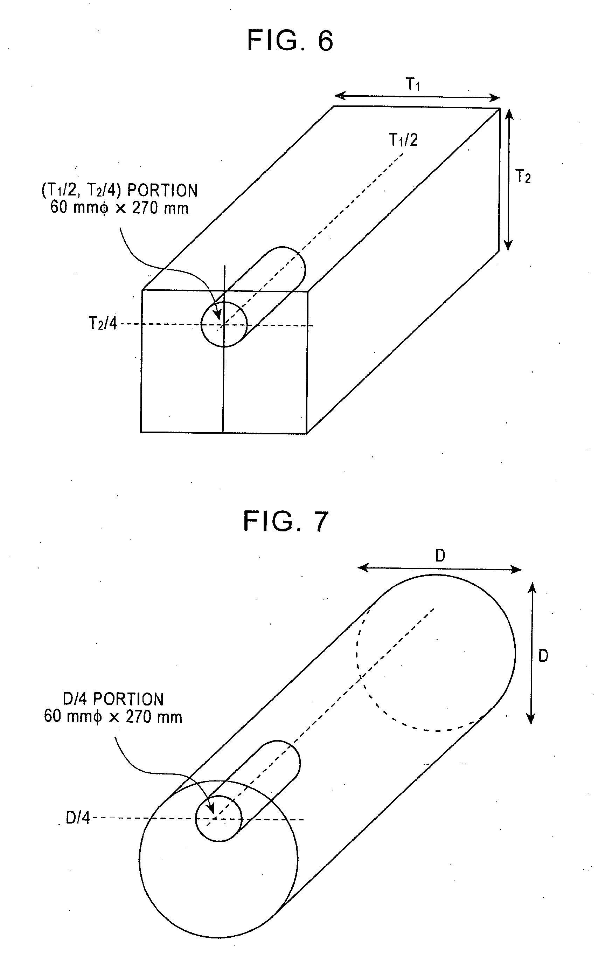

The machinability is preferably determined in actual processing after forging, cutting, quenching, and tempering. However, this requires long term. Thus, the machinability was determined in a turning test (lathe turning test of the outer surface) as described below. A 60 mm$\phi$ x 270 mm round bar was cut from a ($T_1$/2, $T_2$/4) portion ($T_1 = T_2$ denote a side length of a square-forged steel billet: Fig. 6) or a D/4 portion (D denotes the diameter of a circular-forged steel billet: Fig. 7) of a forged steel billet, was heated at 950°C for 20 minutes, and was quenched with an oil at 25°C. The bar was then tempered at 170°C for 1.5 hours. The machinability of the test specimen thus prepared was determined with a lathe turning tester. The turning test was performed with a superhard (P10) cutting tool without a lubricant at a cutting speed of 120 mm/min, a feed speed of 0.2 m/rev, and a depth of cut of 1.0 mm. The amount of time elapsed to the time the flank wear of the tool was 0.2 mm was considered to be the tool life. The degree of reduction in life (tool life ratio = tool life/tool life of SUJ2 equivalent steel) was determined by dividing the tool life for each steel by the tool life for the reference steel (A-1: SUJ2 equivalent steel). The machinability was judged to be improved when the tool life ratio was improved by 15% or more with respect to the reference steel.

[Table 3]

Table 3

| Steel No. | C | Si | Mn | P | S | Cr | Al | O | N | Cu | Ni | Mo | W | Nb | Ti | Zr | V | B | Ec | Note |
|---|---|---|---|---|---|---|---|---|---|---|---|---|---|---|---|---|---|---|---|---|
| A-1 | 1.05 | 0.25 | 0.45 | 0.016 | 0.008 | 1.45 | 0.025 | 0.0010 | 0.0031 | - | - | - | - | - | - | - | - | - | -0.24 | Reference steel |
| B-1 | 0.62 | 0.33 | 0.98 | 0.010 | 0.006 | 0.87 | 0.025 | 0.0010 | 0.0033 | 0.01 | 0.01 | 0.33 | - | - | - | - | - | - | 0.14 | Inventive steel |
| B-2 | 0.60 | 0.26 | 0.85 | 0.011 | 0.005 | 0.80 | 0.025 | 0.0009 | 0.0031 | 0.02 | 0.02 | 0.33 | - | - | - | - | - | - | 0.17 | Inventive steel |
| B-3 | 0.69 | 0.45 | 1.44 | 0.015 | 0.006 | 0.53 | 0.490 | 0.0011 | 0.0041 | - | - | 0.45 | - | - | - | - | - | - | -0.13 | Comparative steel |
| B-4 | 0.56 | 0.42 | 1.00 | 0.012 | 0.005 | 0.52 | 0.005 | 0.0010 | 0.0035 | 0.24 | 0.75 | - | - | 0.012 | - | - | - | - | 0.19 | Inventive steel |
| B-5 | 0.69 | 0.16 | 0.61 | 0.015 | 0.009 | 0.94 | 0.031 | 0.0009 | 0.0042 | - | - | - | - | - | - | - | - | 0.0012 | 0.10 | Inventive steel |
| B-6 | 0.59 | 0.44 | 1.43 | 0.012 | 0.006 | 0.93 | 0.020 | 0.0008 | 0.0043 | - | - | 0.41 | - | - | - | - | - | - | 0.16 | Inventive steel |
| B-7 | 0.70 | 0.49 | 1.53 | 0.011 | 0.005 | 0.51 | 0.111 | 0.0009 | 0.0087 | - | - | - | - | - | 0.002 | - | 0.110 | - | -0.01 | Comparative steel |
| B-8 | 0.60 | 0.24 | 0.97 | 0.010 | 0.007 | 0.95 | 0.025 | 0.0014 | 0.0042 | 0.21 | 0.11 | - | - | - | - | 0.003 | - | - | 0.17 | Inventive steel |
| B-9 | 0.47 | 0.45 | 1.48 | 0.011 | 0.009 | 0.96 | 0.029 | 0.0011 | 0.0049 | - | - | 0.41 | - | - | - | - | - | - | 0.27 | Comparative steel |
| B-10 | 0.92 | 0.21 | 0.77 | 0.015 | 0.006 | 0.95 | 0.033 | 0.0010 | 0.0044 | - | - | - | - | - | - | - | - | - | -0.14 | Comparative steel |
| B-11 | 0.62 | 0.70 | 0.92 | 0.011 | 0.005 | 0.72 | 0.032 | 0.0011 | 0.0062 | 0.18 | 0.09 | - | - | - | - | - | - | - | 0.11 | Comparative steel |
| B-12 | 0.69 | 0.49 | 1.49 | 0.012 | 0.006 | 0.50 | 0.211 | 0.0009 | 0.0042 | - | - | - | 0.53 | - | - | - | - | - | -0.03 | Comparative steel |
| B-13 | 0.63 | 0.25 | 1.20 | 0.011 | 0.006 | 0.89 | 0.049 | 0.0005 | 0.0081 | - | - | 0.33 | - | - | - | - | - | - | 0.12 | Inventive steel |
| B-14 | 0.70 | 0.33 | 0.97 | 0.009 | 0.007 | 0.51 | 0.005 | 0.0007 | 0.0055 | - | - | 0.15 | - | 0.045 | - | - | - | - | 0.06 | Inventive steel |
| B-15 | 0.57 | 0.49 | 1.44 | 0.008 | 0.006 | 0.52 | 0.022 | 0.0009 | 0.0042 | - | - | - | - | - | - | - | - | - | 0.16 | Inventive steel |
| B-16 | 0.69 | 0.21 | 0.61 | 0.015 | 0.009 | 0.89 | 0.035 | 0.0007 | 0.0041 | - | - | 0.15 | 0.35 | - | - | - | - | - | 0.09 | Inventive steel |
| B-17 | 0.65 | 0.49 | 1.12 | 0.011 | 0.008 | 0.55 | 0.005 | 0.0009 | 0.0059 | - | - | - | - | - | 0.011 | - | - | - | 0.09 | Inventive steel |
| B-18 | 0.56 | 0.16 | 1.05 | 0.015 | 0.008 | 1.10 | 0.080 | 0.0009 | 0.0059 | - | - | - | - | - | 0.011 | - | - | - | 0.20 | Inventive steel |
| B-19 | 0.57 | 0.17 | 0.73 | 0.012 | 0.007 | 0.72 | 0.010 | 0.0007 | 0.0045 | 0.01 | 0.02 | 0.28 | - | - | - | - | - | - | 0.21 | Inventive steel |
| B-20 | 0.63 | 0.25 | 0.88 | 0.013 | 0.007 | 0.81 | 0.530 | 0.0007 | 0.0045 | 0.01 | 0.02 | 0.28 | - | - | - | - | - | - | -0.04 | Comparative steel |
| B-21 | 0.63 | 0.34 | 0.89 | 0.009 | 0.003 | 0.83 | 0.026 | 0.0008 | 0.0039 | - | - | 0.31 | - | - | - | - | - | - | 0.13 | Inventive steel |
| B-22 | 0.56 | 0.35 | 0.99 | 0.012 | 0.005 | 0.99 | 0.041 | 0.0010 | 0.0041 | - | - | - | - | - | - | - | - | - | 0.20 | Inventive steel |
| B-23 | 0.70 | 0.49 | 1.54 | 0.011 | 0.006 | 0.51 | 0.112 | 0.0009 | 0.0034 | - | - | - | - | 0.015 | 0.013 | - | - | - | -0.01 | Comparative steel |
| B-24 | 0.60 | 0.25 | 0.77 | 0.009 | 0.007 | 0.83 | 0.025 | 0.0011 | 0.0036 | - | - | - | - | 0.011 | - | - | 0.055 | - | 0.17 | Inventive steel |
| B-25 | 0.66 | 0.20 | 1.01 | 0.011 | 0.005 | 0.99 | 0.022 | 0.0010 | 0.0041 | - | - | 0.29 | - | - | - | - | - | - | 0.12 | Inventive steel |
| B-26 | 0.69 | 0.16 | 0.99 | 0.012 | 0.005 | 0.77 | 0.035 | 0.0010 | 0.0033 | 0.22 | 0.43 | - | - | 0.011 | - | - | - | - | 0.08 | Inventive steel |
| B-27 | 1.05 | 0.25 | 0.45 | 0.016 | 0.008 | 1.45 | 0.025 | 0.0010 | 0.0031 | - | - | - | - | 0.011 | - | - | - | - | -0.24 | Comparative steel |
| B-28 | 0.64 | 0.25 | 0.86 | 0.008 | 0.001 | 0.78 | 0.028 | 0.0009 | 0.0035 | - | - | 0.26 | - | - | - | - | - | - | 0.13 | Inventive steel |
| B-29 | 0.61 | 0.34 | 0.93 | 0.017 | 0.003 | 0.86 | 0.029 | 0.0008 | 0.0032 | - | - | 0.32 | - | - | - | - | - | - | 0.15 | Inventive steel |
| B-30 | 0.67 | 0.38 | 0.91 | 0.009 | 0.001 | 1.20 | 0.025 | 0.0010 | 0.0035 | - | - | - | - | - | - | - | - | - | 0.11 | Comparative steel |
| B-31 | 0.67 | 0.34 | 0.89 | 0.011 | 0.002 | 0.40 | 0.033 | 0.0009 | 0.0035 | - | - | - | - | - | - | - | - | - | 0.07 | Comparative steel |
| B-32 | 0.80 | 0.26 | 0.91 | 0.010 | 0.003 | 0.95 | 0.027 | 0.0008 | 0.0042 | - | - | - | - | - | - | - | - | - | -0.03 | Comparative steel |
| B-33 | 0.60 | 0.25 | 0.79 | 0.011 | 0.004 | 0.85 | 0.027 | 0.0008 | 0.0020 | - | - | - | - | - | - | - | - | - | 0.17 | Comparative steel |
| B-34 | 0.61 | 0.26 | 0.81 | 0.011 | 0.004 | 0.88 | 0.029 | 0.0010 | 0.0160 | - | - | - | - | - | - | - | - | - | 0.16 | Comparative steel |

Chemical components (% by mass)

[Table 4]

Table 4 Billet Size after Casting and after Forging

| Steel No. | Section of billet (mm) | | | Section after forging (mm) | | Heating temperature (°C) | Note |
|---|---|---|---|---|---|---|---|
| | Top | Bottom | Material | Shape*1 | Seize*2 | | |
| A-1 | 1350 × 1250 | 1280 × 830 | Ingot steel | □ | 550 | 1150 | Reference steel |
| B-1 | 1330 × 1230 | 1280 × 860 | Ingot steel | □ | 700 | 1150 | Inventive steel |
| B-2 | 1100 × 1100 | 860 × 860 | Ingot steel | □ | 650 | 1100 | Inventive steel |
| B-3 | 1000 × 1000 | 700 × 700 | Ingot steel | ○ | 550 | 1150 | Comparative steel |
| B-4 | 1250 × 1150 | 1180 × 730 | Ingot steel | ○ | 600 | 1150 | Inventive steel |
| B-5 | 1450 × 1350 | 1380 × 930 | Ingot steel | □ | 750 | 1100 | Inventive steel |
| B-6 | 900 × 900 | 700 × 700 | Ingot steel | ○ | 450 | 1250 | Inventive steel |
| B-7 | 1330 × 1230 | 1280 × 860 | Ingot steel | □ | 600 | 1050 | Comparative steel |
| B-8 | 1330 × 1230 | 1280 × 860 | Ingot steel | □ | 600 | 1000 | Inventive steel |
| B-9 | 1100 × 1100 | 860 × 860 | Ingot steel | □ | 450 | 1150 | Comparative steel |
| B-10 | 1450 × 1350 | 1380 × 930 | Ingot steel | □ | 750 | 1050 | Comparative steel |
| B-11 | 1450 × 1350 | 1380 × 930 | Ingot steel | □ | 750 | 1150 | Comparative steel |
| 8-12 | 900 × 900 | 700 × 700 | Ingot steel | ○ | 450 | 1100 | Comparative steel |
| B-13 | 1330 × 1230 | 1280 × 860 | Ingot steel | ○ | 800 | 1200 | Inventive steel |
| B-14 | 1330 × 1230 | 1280 × 860 | Ingot steel | □ | 700 | 1250 | Inventive steel |
| B-15 | 1450 × 1350 | 1380 × 930 | Ingot steel | □ | 600 | 1150 | Inventive steel |
| B-16 | 1450 × 1350 | 1380 × 930 | Ingot steel | ○ | 600 | 1150 | Inventive steel |
| B-17 | 1100 × 1100 | 860 × 860 | Ingot steel | □ | 450 | 1350 | Inventive steel |
| B-18 | 1250 × 1150 | 1180 × 730 | Ingot steel | ○ | 500 | 1000 | Inventive steel |
| B-19 | 1100 × 1100 | 860 × 860 | Ingot steel | ○ | 400 | 1050 | Inventive steel |
| B-20 | 1250 × 1150 | 1180 × 730 | Ingot steel | □ | 550 | 1100 | Comparative steel |

(continued)

| Steel No. | Section of billet (mm) | | | Section after forging (mm) | | Heating temperature (°C) | Note |
|---|---|---|---|---|---|---|---|
| | Top | Bottom | Material | Shape*1 | Seize*2 | | |
| B-21 | 1400 × 300 | 1400 × 300 | Continuously casted steel | □ | 450 | 1150 | Inventive steel |
| B-22 | 1400 × 300 | 1400 × 300 | Continuously casted steel | □ | 600 | 1200 | Inventive steel |
| B-23 | 1400 × 300 | 1400 × 300 | Continuously casted steel | □ | 450 | 1100 | Comparative steel |
| B-24 | 1400 × 300 | 1400 × 300 | Continuously casted steel | □ | 550 | 1100 | Inventive steel |
| B-25 | 1400 × 300 | 1400 × 300 | Continuously casted steel | ○ | 650 | 1150 | Inventive steel |
| B-26 | 1400 × 300 | 1400 × 300 | Continuously casted steel | ○ | 600 | 1150 | Inventive steel |
| B-27 | 1400 × 300 | 1400 × 300 | Continuously casted steel | □ | 550 | 1150 | Comparative steel |
| B-28 | 1330 × 1230 | 1280 × 860 | Ingot steel | □ | 650 | 1270 | Inventive steel |
| B-29 | 1330 × 1230 | 1280 × 860 | Ingot steel | □ | 650 | 1250 | Inventive steel |
| B-30 | 1330 × 1230 | 1280 × 860 | Ingot steel | □ | 650 | 1250 | Comparative steel |
| B-31 | 1330 × 1230 | 1280 × 860 | Ingot steel | □ | 650 | 1250 | Comparative steel |
| B-32 | 1330 × 1230 | 1280 × 860 | Ingot steel | □ | 650 | 1250 | Comparative steel |
| B-33 | 1330 × 1230 | 1280 × 860 | Ingot steel | □ | 650 | 1250 | Comparative steel |
| B-34 | 1330 × 1230 | 1280 × 860 | Ingot steel | □ | 650 | 1250 | Comparative steel |

*1: ○ denotes round forging, denotes square forging.
*2: Diameter for round forging, Side length for square forging

Table 5 shows the presence or absence of eutectic carbide, the rolling contact fatigue life characteristics, and the results of machinability test. It was shown that steels B-1 to B-2, B-4 to B-6, B-8, B-13 to B-19, B-21 to B-22, B-24 to B-26, and B-28 to B-29, which satisfy the composition and Ec according to the present invention, contained no eutectic carbide in the steel and had excellent rolling contact fatigue life characteristics. In contrast, steels B-3, B-7, B-12, and B-23, which have a composition within the scope of the present invention but Ec outside the scope of the present invention, contained eutectic carbide in the steel and had a shortened rolling contact fatigue life. Steels B-9 to B-11, B-20, B-27, and B-31 to B-34, which have a composition outside the scope of the present invention, had a shortened rolling contact fatigue life. Steel B-30, which has Ec within the scope of the present invention but a Cr content outside the scope of the present invention, had insufficient machinability.

[Table 5]

Table 5 Test results

| Steel No. | Presence of eutectic carbide | Ec | Rolling contact fatigue life (B10 life ratio) | Tool life ratio | Note |
|---|---|---|---|---|---|
| A-1 | Yes | -0.24 | 1.00 | 1.00 | Reference steel |
| B-1 | No | 0.14 | 1.22 | 1.21 | Inventive steel |
| B-2 | No | 0.17 | 1.18 | 1.21 | Inventive steel |
| B-3 | Yes | -0.13 | 1.02 | 1.19 | Comparative steel |
| B-4 | No | 0.19 | 1.15 | 1.22 | Inventive steel |
| B-5 | No | 0.10 | 1.25 | 1.23 | Inventive steel |
| B-6 | No | 0.16 | 1.20 | 1.22 | Inventive steel |
| B-7 | Yes | -0.01 | 1.09 | 1.18 | Comparative steel |
| B-8 | No | 0.17 | 1.18 | 1.23 | Inventive steel |
| B-9 | No | 0.27 | 1.09 | 1.25 | Comparative steel |
| B-10 | Yes | -0.14 | 1.05 | 1.12 | Comparative steel |
| B-11 | No | 0.11 | 1.08 | 1.20 | Comparative steel |
| B-12 | Yes | -0.03 | 1.08 | 1.21 | Comparative steel |
| B-13 | No | 0.12 | 1.17 | 1.21 | Inventive steel |
| B-14 | No | 0.06 | 1.13 | 1.19 | Inventive steel |
| B-15 | No | 0.16 | 1.23 | 1.23 | Inventive steel |
| B-16 | No | 0.09 | 1.20 | 1.21 | Inventive steel |
| B-17 | No | 0.09 | 1.19 | 1.22 | Inventive steel |
| B-18 | No | 0.20 | 1.12 | 1.17 | Inventive steel |
| B-19 | No | 0.21 | 1.12 | 1.23 | Inventive steel |
| B-20 | Yes | -0.04 | 1.08 | 1.13 | Comparative steel |
| B-21 | No | 0.13 | 1.15. | 1.22 | Inventive steel |
| B-22 | No | 0.20 | 1.12 | 1.23 | Inventive steel |
| B-23 | Yes | -0.01 | 1.08 | 1.20 | Comparative steel |
| B-24 | No | 0.17 | 1.18 | 1.22 | Inventive steel |
| B-25 | No | 0.12 | 1.19 | 1.20 | Inventive steel |
| B-26 | No | 0.08 | 1.13 | 1.20 | Inventive steel |
| B-27 | Yes | -0.24 | 1.05 | 0.99 | Comparative steel |
| B-28 | No | 0.13 | 1.17 | 1.22 | Inventive steel |
| B-29 | No | 0.15 | 1.21 | 1.22 | Inventive steel |
| B-30 | No | 0.11 | 1.15 | 1.12 | Comparative steel |
| B-31 | No | 0.07 | 1.08 | 1.21 | Comparative steel |
| B-32 | Yes | -0.03 | 1.07 | 1.16 | Comparative steel |
| B-33 | No | 0.17 | 1.08 | 1.22 | Comparative steel |
| B-34 | No | 0.16 | 1.07 | 1.19 | Comparative steel |

Industrial Applicability

In accordance with the present invention, bearing steels having excellent rolling contact fatigue life characteristics can be manufactured at low cost, and industrially very valuable bearing steels can be provided.

**Claims**

1.   A bearing steel having a composition consisting of:

C: 0.56% by mass or more and 0.70% by mass or less,
Si: 0.15% by mass or more and less than 0.50% by mass,
Mn: 0.60% by mass or more and 1.50% by mass or less,
Cr: 0.50% by mass or more and 1.10% by mass or less,
P: 0.025% by mass or less,
S: 0.025% by mass or less,
Al: 0.005% by mass or more and 0.500% by mass or less,
O: 0.0015% by mass or less,
N: 0.0030% by mass or more and 0.015% by mass or less,

and optionally further containing one or more selected from the group consisting of: ,

Cu: 0.005% by mass or more and 0.5% by mass or less,
Ni: 0.005% by mass or more and 1.00% by mass or less, and
Mo: 0.01% by mass or more and 0.5% by mass or less,

and optionally further containing one or more selected from the group consisting of:

W: 0.001% by mass or more and 0.5% by mass or less,
Nb: 0.001% by mass or more and 0.1% by mass or less,
Ti: 0.001% by mass or more and 0.1% by mass or less,
Zr: 0.001% by mass or more and 0.1% by mass or less, and
V: 0.002% by mass or more and 0.5% by mass or less

and optionally further containing

B: 0.0002% by mass or more and 0.005% by mass or less

and a reminder of iron and incidental impurities,
wherein eutectic carbide formation index Ec defined by the formula (1) satisfies $0 < Ec \leq 0.25$,
wherein

$$Ec = (-0.07 \times [\%Si] - 0.03 \times [\%Mn] + 0.04 \times [\%Cr] - 0.36 \times [\%Al] + 0.79) - [\%C] \qquad (1)$$

wherein [ ] indicates the amount of component described in parentheses (% by mass).

2.   A bearing steel according to claim 1, the steel having a composition consisting of
C, Si, Mn, Cr, P, S, Al, O, N, and
a reminder of iron and incidental impurities.

3.   A bearing steel according to claim 1, the steel having a composition consisting of
C, Si, Mn, Cr, P, S, Al, O, N,
one or more selected from the group consisting of Cu, Ni, Mo, and
a reminder of iron and incidental impurities.

4.   A bearing steel according to claim 1, the steel having a composition consisting of

C, Si, Mn, Cr, P, S, Al, O, N,
one or more selected from the group consisting of W, Nb, Ti, Zr, V, and a reminder of iron and incidental impurities.

**5.** A bearing steel according to claim 1, the steel having a composition consisting of
C, Si, Mn, Cr, P, S, Al, O, N, B and
a reminder of iron and incidental impurities.

**6.** A bearing steel according to claim 1, the steel having a composition consisting of
C, Si, Mn, Cr, P, S, Al, O, N,
one or more selected from the group consisting of Cu, Ni, Mo,
one or more selected from the group consisting of W, Nb, Ti, Zr, V, and
a reminder of iron and incidental impurities.

**7.** A bearing steel according to claim 1, the steel having a composition consisting of
C, Si, Mn, Cr, P, S, Al, O, N, B,
one or more selected from the group consisting of Cu, Ni, Mo, and
a reminder of iron and incidental impurities.

**8.** A bearing steel according to claim 1, the steel having a composition consisting of
C, Si, Mn, Cr, P, S, Al, O, N, B,
one or more selected from the group consisting of W, Nb, Ti, Zr, V, and a reminder of iron and incidental impurities.

**9.** A bearing steel according to claim 1, the steel having a composition consisting of
C, Si, Mn, Cr, P, S, Al, O, N, B,
one or more selected from the group consisting of Cu, Ni, Mo,
one or more selected from the group consisting of W, Nb, Ti, Zr, V, and
a reminder of iron and incidental impurities.

**Patentansprüche**

**1.** Wälzlagerstahl mit einer Zusammensetzung, bestehend aus:

C: 0,56% oder mehr, bezogen auf Masse, und 0,70% oder weniger, bezogen auf Masse,
Si: 0,15% oder mehr, bezogen auf Masse, und weniger als 0,50%, bezogen auf Masse,
Mn: 0,60% oder mehr, bezogen auf Masse, und 1,50% oder weniger, bezogen auf Masse,
Cr: 0,50% oder mehr, bezogen auf Masse, und 1,10% oder weniger, bezogen auf Masse,
P: 0,025% oder weniger, bezogen auf Masse,
S: 0,025% oder weniger, bezogen auf Masse,
Al: 0,005% oder mehr, bezogen auf Masse, und 0,500% oder weniger, bezogen auf Masse,
O: 0,0015% oder weniger, bezogen auf Masse,
N: 0,0030% oder mehr, bezogen auf Masse, und 0,015% oder weniger, bezogen auf Masse,

und gegebenenfalls zudem ein oder mehr Elemente, ausgewählt aus der Gruppe mit:

Cu: 0,005% oder mehr, bezogen auf Masse, und 0,5% oder weniger, bezogen auf Masse,
Ni: 0,005% oder mehr, bezogen auf Masse, und 1,00% oder weniger, bezogen auf Masse, und
Mo: 0,01% oder mehr, bezogen auf Masse, und 0,5% oder weniger, bezogen auf Masse,

und gegebenenfalls zudem ein oder mehr Elemente, ausgewählt aus der Gruppe mit:

W: 0,001% oder mehr, bezogen auf Masse, und 0,5% oder weniger, bezogen auf Masse,
Nb: 0,001% oder mehr, bezogen auf Masse, und 0,1% oder weniger, bezogen auf Masse,
Ti: 0,001% oder mehr, bezogen auf Masse, und 0,1 % oder weniger, bezogen auf Masse,
Zr: 0,001% oder mehr, bezogen auf Masse, und 0,1 % oder weniger, bezogen auf Masse, und
V: 0,002% oder mehr, bezogen auf Masse, und 0,5% oder weniger, bezogen auf Masse,

und gegebenenfalls zudem

B: 0,0002% oder mehr, bezogen auf Masse, und 0,005% oder weniger,

bezogen auf Masse,
und einem Rest aus Eisen und unvermeidbaren Verunreinigungen, wobei für den durch Formel (1) definierten Index Ec der Bildung von eutektischem Karbid gilt:
0 < Ec ≤ 0,25,
wobei

$$Ec = (-0{,}07 \times [\%Si] - 0{,}03 \times [\%Mn] + 0{,}04 \times [\%Cr] - 0{,}36 \times [\%Al] + 0{,}79) - [\%C] \quad (1),$$

wobei [ ] die Menge der in Klammern beschriebenen Komponente (% bezogen auf Masse) angibt.

2. Wälzlagerstahl nach Anspruch 1 mit einer Zusammensetzung, bestehend aus
   C, Si, Mn, Cr, P, S, Al, O, N und
   einem Rest aus Eisen und unvermeidbaren Verunreinigungen.

3. Wälzlagerstahl nach Anspruch 1 mit einer Zusammensetzung, bestehend aus
   C, Si, Mn, Cr, P, S, Al, O, N,
   einem oder mehr Elementen, ausgewählt aus der Gruppe mit Cu, Ni, Mo, und einem Rest aus Eisen und unvermeidbaren Verunreinigungen.

4. Wälzlagerstahl nach Anspruch 1 mit einer Zusammensetzung, bestehend aus
   C, Si, Mn, Cr, P, S, Al, O, N,
   einem oder mehr Elementen, ausgewählt aus der Gruppe mit W, Nb, Ti, Zr, V, und
   einem Rest aus Eisen und unvermeidbaren Verunreinigungen.

5. Wälzlagerstahl nach Anspruch 1 mit einer Zusammensetzung, bestehend aus
   C, Si, Mn, Cr, P, S, Al, O, N, B, und
   einem Rest aus Eisen und unvermeidbaren Verunreinigungen.

6. Wälzlagerstahl nach Anspruch 1 mit einer Zusammensetzung, bestehend aus
   C, Si, Mn, Cr, P, S, Al, O, N,
   einem oder mehr Elementen, ausgewählt aus der Gruppe mit Cu, Ni, Mo, einem oder mehr Elementen, ausgewählt aus der Gruppe mit W, Nb, Ti, Zr, V, und
   einem Rest aus Eisen und unvermeidbaren Verunreinigungen.

7. Wälzlagerstahl nach Anspruch 1 mit einer Zusammensetzung, bestehend aus
   C, Si, Mn, Cr, P, S, Al, O, N, B,
   einem oder mehr Elementen, ausgewählt aus der Gruppe mit Cu, Ni, Mo, und einem Rest aus Eisen und unvermeidbaren Verunreinigungen.

8. Wälzlagerstahl nach Anspruch 1 mit einer Zusammensetzung, bestehend aus
   C, Si, Mn, Cr, P, S, Al, O, N, B,
   einem oder mehr Elementen, ausgewählt aus der Gruppe mit W, Nb, Ti, Zr, V, und
   einem Rest aus Eisen und unvermeidbaren Verunreinigungen.

9. Wälzlagerstahl nach Anspruch 1 mit einer Zusammensetzung, bestehend aus
   C, Si, Mn, Cr, P, S, Al, O, N, B,
   einem oder mehr Elementen, ausgewählt aus der Gruppe mit Cu, Ni, Mo, einem oder mehr Elementen, ausgewählt aus der Gruppe mit W, Nb, Ti, Zr, V, und
   einem Rest aus Eisen und unvermeidbaren Verunreinigungen.

**Revendications**

1. Acier à roulements d'une composition consistant en :

C : 0,56% en masse ou plus et 0,70% en masse ou moins,
Si : 0,15% en masse ou plus et moins que 0,50% en masse,
Mn : 0,60% en masse ou plus et 1,50% en masse ou moins,
Cr : 0,50% en masse ou plus et 1,10% en masse ou moins,
P : 0,025% en masse ou moins,
S : 0,025% en masse ou moins,
Al : 0,005% en masse ou plus et 0,500% en masse ou moins,
O : 0,0015% en masse ou moins,
N : 0,0030% en masse ou plus et 0,015% en masse ou moins,

et en option contenant un ou plusieurs sélectionnés dans le groupe consistant en :

Cu : 0,005% en masse ou plus et 0,5% en masse ou moins,
Ni : 0,005% en masse ou plus et 1,00% en masse ou moins, et
Mo : 0,01% en masse ou plus et 0,5% en masse ou moins,

et en option contenant en outre un ou plusieurs sélectionnés dans le groupe consistant en :

W : 0,001% en masse ou plus et 0,5% en masse ou moins,
Nb:0,001% en masse ou plus et 0,1% en masse ou moins,
Ti : 0,001% en masse ou plus et 0,1% en masse ou moins,
Zr: 0,001% en masse ou plus et 0,1% en masse ou moins, et
V : 0,002% en masse ou plus et 0,5% en masse ou moins

et contenant en option en outre

B : 0,0002% en masse ou plus et 0,005% en masse ou moins, et un restant de fer et d'impuretés accessoires,

où l'indice de formation de carbure eutectique Ec défini par la formule (1) satisfait à O<Ec≤0,25,
où

$$Ec = (-0,07x[\%Si]-0,03x[\%Mn] + 0,04x[\%Cr]-0,36x[\%Al]+0,79)-[\%C] \quad (1),$$

où [] indique la quantité de composant décrite entre parenthèses (% en masse).

2. Acier à roulements selon la revendication 1, l'acier ayant une composition consistant en
C, Si, Mn, Cr, P, S, Al, O, N et
un reste de fer et des impuretés accessoires.

3. Acier à roulements selon la revendication 1, l'acier ayant une composition consistant en
C, Si, Mn, Cr, P, S, Al, O, N,
un ou plusieurs sélectionnés dans le groupe consistant en Cu, Ni, Mo et un reste de fer et des impuretés accessoires.

4. Acier à roulements selon la revendication 1, l'acier ayant une composition consistant en
C, Si, Mn, Cr, P, S, Al, O, N,
un ou plusieurs sélectionnés dans le groupe consistant en W, Nb, Ti, Zr, V et un reste de fer et des impuretés accessoires.

5. Acier à roulements selon la revendication 1, l'acier ayant une composition consistant en
C, Si, Mn, Cr, P, S, Al, O, N, B et
un reste de fer et des impuretés accessoires.

6. Acier à roulements selon la revendication 1, l'acier ayant une composition consistant en
C, Si, Mn, Cr, P, S, Al, O, N,
un ou plusieurs sélectionnés dans le groupe consistant en Cu, Ni, Mo,

EP 2 508 637 B1

un ou plusieurs sélectionnés dans le groupe consistant en W, Nb, Ti, Zr, V et
un reste de fer et d'impuretés accessoires.

7. Acier à roulements selon la revendication 1, l'acier ayant une composition consistant en
C, Si, Mn, Cr, P, S, Al, O, N, B,
un ou plusieurs sélectionnés dans le groupe consistant en Cu, Ni, Mo et
un reste de fer et d'impuretés accessoires.

8. Acier à roulements selon la revendication 1, l'acier ayant une composition consistant en
C, Si, Mn, Cr, P, S, Al, O, N, B,
un ou plusieurs sélectionnés dans le groupe consistant en W, Nb, Ti, Zr, V et un reste de fer et d'impuretés accessoires.

9. Acier à roulements selon la revendication 1, l'acier ayant une composition consistant en
C, Si, Mn, Cr, P, S, Al, O, N, B,
un ou plusieurs sélectionnés dans le groupe consistant en Cu, Ni, Mo,
un ou plusieurs sélectionnés dans le groupe consistant en W, Nb, Ti, Zr, V et
un reste de fer et d'impuretés accessoires.

# FIG. 1

# FIG. 2

(T₁/2, T₂/4) PORTION
(TEST AREA: 10 mm × 10 mm)

$T_1$

$T_1/2$

$T_2$

$T_2/4$

$T_2/2$

(T₁/2, T₂/2) PORTION
(TEST AREA: 10 mm × 10 mm)

DRAWING
DIRECTION

# FIG. 3

$T_1$

$T_1/2$

$T_2$

(T₁/2, T₂/4) PORTION
60 mmφ × 5.3 mm

$T_2/4$

DRAWING
DIRECTION

# FIG. 4

D

D

D/4 PORTION
(TEST AREA: 10 mm × 10 mm)

D/4

D/2

D/2 PORTION
(TEST AREA: 10 mm × 10 mm)

DRAWING
DIRECTION

# FIG. 5

D

D

D/4 PORTION
60 mmφ × 5.3 mm

D/4

DRAWING
DIRECTION

## FIG. 6

T₁

T₁/2

T₂

(T₁/2, T₂/4) PORTION
60 mmφ × 270 mm

T₂/4

## FIG. 7

D

D

D/4 PORTION
60 mmφ × 270 mm

D/4

**EP 2 508 637 B1**

**Patent documents cited in the description**

- JP 1306542 A
- JP 3126839 A
- JP 7127643 A
- JP 3007834 B
- JP 5271866 A
- JP 3075312 A
- JP 4066903 B
- JP 4050829 B